# EUROPEAN PATENT APPLICATION

(11) **EP 2 829 324 A1**
(43) Date of publication of application: **28.01.2015**
(21) Application number: 14275155.1
(22) Date of filing: 23.07.2014
(51) Int. Cl.: B01L 3/00, B01L 3/02

(54) **Systems, methods, and apparatus for sample dispersion**

(30) Priority: 26.07.2013 US 201313952198
(71) Applicant: Union Biometrica, Inc., Holliston, MA 01746 (US)
(72) Inventor: Bogan, Christopher, Somerville, MA 02143 (US); Malinouski, Mikalai, Ashland, MA 01721 (US); Pulak, Rock, Belmont, MA 02478 (US); Mullins, Thomas F. IV, Franklin, MA 02038 (US)
(74) Representative: Nash, David Allan

(57) **Abstract**

Some embodiments comprise a sample dispersion system including a sample container having a housing with two or more orifices to control the introduction of said fluid and/or the passage of carrier solution into the sample container and/or the passage of fluid from the sample container. The carrier fluid may be moving in a flow from an inlet orifice to an outlet orifice in order to disperse the sample fluid in flow. The sample container may be configured to rotate about an axis substantially parallel to the fluid flow. The sample container may be configured to rotate (or tilt) about an axis substantially perpendicular to the fluid flow. The sample container may alternate from a first position to a second position at controllable rate, frequency, and/or direction.

## Description

### TECHNICAL FIELD

The disclosure relates to systems, methods, and apparatus for dispersing particles in a solution, and more specifically, the introduction of particles into a fluid stream.

### BACKGROUND

Microfluidic devices, including but not limited to, flow cytometers, are designed to move particles of interest, as one nonlimiting example, biological cells, for analytical purposes and, in some cases, the separation and dispensing of sub-populations of particles in a sample. The particles may be entrained in a narrow flowing stream of fluid. A beam of one or more lasers or other light sources is directed onto the stream of liquid containing the particles to be analyzed. One or more detectors are aimed at the point where the stream passes through the light beam to gather information in order to count and characterize the particles.

Prior to introducing the particles into the detection portion of the microfluidic device, it may be desired that the particles remain uniformly suspended and dispersed within the fluid stream. A relative uniformity of particle dispersion is often desired because overlapping or closely adjacent particles can limit the speed of particle analysis and interfere with the accuracy of analysis of the particles. Additionally, if dispensing of particles is desired (typically for the purpose of physically separating sub-populations of particles that have specific properties), there must be enough separation between particles so that individual particles can be mechanically isolated.

Current techniques for dispersing particles in a fluid stream for analysis on a microfluidic device involve either aspirating or pushing a sample of particles dispersed in fluid from a sample container to the device. In addition, sample particle dispersion can be achieved by mechanically mixing the sample using stirring mechanisms inserted into the sample, or the sample container itself may be agitated or rotated to produce a vortex and the desired mixing effect. However, these techniques are not effective for all samples, including but not limited to, samples that are delicate or difficult to suspend in solution (e.g., non-isobuoyant). Delicate samples can be damaged by mechanical stirring mechanisms. Non-isobuoyant samples are difficult to disperse uniformly even when current mixing techniques are applied.

For example, adipocytes are delicate cells that are buoyant due to high lipid content. Thus, adipocyte cells tend to remain at the top of the sample fluid unless vigorously mixed. Vigorous mixing can damage these cell types, but without vigorous mixing the sample particles often float atop the sample fluid and are not dispersed until the top layer of the sample fluid is introduced to the fluid steam. This has the effect of introducing the particles at highly variable rates, at a low concentration at the beginning of running the sample and at a high concentration near the end of the sample. In the worst case, particles may be introduced at the end of the sample as a bolus, making it difficult to sufficiently separate the individual particles of the sample in the fluid stream. This may result in poor and difficult analysis and physical sorting of the sample particles.

Likewise, non-buoyant particles tend to sink to the bottom of the sample fluid and are difficult to suspend in fluid without a reasonable amount of stirring. If the sample particles leave the sample container from the bottom to join the fluid stream for analysis and physical sorting, the resulting mass of particles does not get dispersed evenly and may form a bolus of concentrated particles at the very beginning of running the sample. Here, again, current technologies that use vigorous stirring may damage the sample particles. For example, large soil particles are too heavy to be suspended by traditional mixing techniques. Vigorous mixing will cause large soil particles to break apart preventing the ability to analyze and physically sort soil structures.

Additionally, fragile sample particles may be sensitive to commonly used mixing mechanisms. Vigorous mixing of the carrier solution and sample particles may rupture or otherwise damage the particles. Further, other commonly used mechanical methods such as magnetic stir bars or other stirring probes may damage the fragile particles. Vigorous mixing may also introduce air bubbles into the carrier solution and these bubbles can interfere with the accurate analysis of the sample. Fragile sample particles may also be damaged by the shear forces that occur when a sample particle is quickly accelerated through an orifice at the exit of the sample container. This acceleration and resulting damage due to the orifice shear forces occurs in traditional sample container designs because in these designs the sample is either pushed out an exit orifice by pressurizing the sample container or the sample is aspirated out of the sample container through an orifice associated with the aspirating tube.

For at least these reasons, an unmet need remains for improved systems, methods, and apparatus for dispersing and introducing sample particles to a fluid stream to more easily, delicately, and accurately analyze and physically sort sample particles that would otherwise be difficult to work with using microfluidics devices.

### BRIEF DESCRIPTION OF THE DRAWINGS

Referring now to the drawings, exemplary illustrative embodiments are shown in detail. Although the drawings represent some embodiments, the drawings are not necessarily to scale and certain features may be exaggerated, removed, or partially sectioned to better illustrate and explain the present disclosure. The nonlimiting embodiments set forth herein are not intended to be exhaustive or otherwise limit or restrict the claims to the precise forms and configurations shown in the drawings and/or disclosed in the following detailed description. Accordingly, various combinations and modifications of the features consistent with the teachings of the present disclosure may be desired for particular applications or implementations.
Fig. 1 illustrates an orthographic front view of an exemplary device for fluidic analysis including an automated device and the sample introduction system.
Fig. 2 illustrates a schematic representation of an exemplary manually controlled sample introduction system.
Fig. 2B illustrates a schematic representation of exemplary automated rotating sample container that can be used in the sample introduction system shown in Fig. 2.
Fig. 3A is a cross-sectional side view of a rotating sample container having non-isobuoyant sample particles illustrating an exemplary system for dispersing the sample particles. In this example, particles float in the sample fluid.
Fig. 3B is a cross-sectional side view of a rotating sample container having non-isobuoyant sample particles illustrating an additional exemplary system for dispersing the sample particles. In this example, particles sink in the sample fluid.
Fig. 4A is a diagrammatic end-on view of an exemplary embodiment of a sample dispersion system showing rotation around the axis of flow.
Fig. 4B is a diagrammatic end-on view of an alternative embodiment of a sample dispersion system showing rotation around the axis of flow.
Fig. 5 illustrates a schematic representation of exemplary automated tilting sample container that can be used in the sample introduction system shown in Fig. 2. Three different positions of the same assembly are shown.
Fig. 6A is a side view of a tilting sample container having non-isobuoyant sample particles illustrating an exemplary system for dispersing the sample particles. In this example, particles float in the sample fluid.
Fig. 6B is a side view of a tilting sample container having non-isobuoyant sample particles illustrating an additional exemplary system for dispersing the sample particles. In this example, particles sink in the sample fluid.
Fig. 7 illustrates an isometric representation of exemplary automated rotating and tilting sample container that can be used in the sample introduction system shown in Fig. 2.

### DETAILED DESCRIPTION

Without limitation to only those embodiments expressly disclosed herein and without waiving or disclaiming any embodiments, some embodiments comprise systems, methods, and apparatus which provide gentle agitation or mixing of delicate sample particles so that the particles become temporarily suspended (*e.g*., dispersed) in a sample fluid for introduction into a fluid stream for, as one nonlimiting example, a micro fluidics device such as a flow cytometer. The methods, system, and apparatus further have the capability of diluting the sample particles and introducing them to the flow stream that carries the sample particles into the fluidics device without also introducing air to the flow stream (*e.g*., preventing air bubbles).

Without limitation to only exemplary embodiments expressly discussed below, and without waiver or limitation, some embodiments comprise a sample dispersion system for an analytical device, some embodiments comprise a system for detecting particles in a sample, some embodiments comprise a method for dispersing particles in a fluid stream for analytical purposes, and some embodiments comprise a sample introduction system.

In some embodiments, a sample dispersion system for an analytical device, comprises a movable sample container configured to completely enclose a fluid including a plurality of sample particles, the sample container having a housing with at least two closable orifices: an inlet orifice to control the introduction of carrier solution into the sample container, and an outlet orifice to control the passage of said fluid and carrier solution from the sample container, wherein said fluid and carrier solution are flowable from the inlet orifice to the outlet orifice, and the inlet and the outlet orifices are respectively configured to halt fluid flow in a closed state and to allow fluid flow in an open state; and a carrier reservoir in fluid communication with an inlet orifice of the sample container, wherein the carrier reservoir contains a liquid carrier solution for moving a plurality of sample particles in liquid flow and the carrier solution is made to flow from the carrier reservoir through the sample container when both the inlet and outlet orifices are in the open state; prior to the flow of carrier solution through the sample container, said fluid including a plurality of sample particles is introduced to the sample container via the inlet or the outlet orifices or in some embodiments another closable orifice in the sample container housing; the sample container containing said fluid is moved about an axis in relation to the flow of the carrier solution through the sample container, said movement dispersing a plurality of the sample particles in said fluid and carrier solution; and said fluid and carrier solution exits the sample container via the outlet when open for analysis by the device.

Some embodiments comprise a system for detecting particles in a sample, comprising:
a sample dispersion system comprising a movable sample container configured to completely enclose a fluid including a plurality of sample particles, the sample container having a housing with a first closable inlet to control the introduction of said fluid into the sample container through the inlet, a second closable inlet to control the introduction of carrier solution into the sample container, and a closable outlet to control the passage of said fluid and carrier solution from the sample container through the outlet, wherein said fluid and carrier solution is flowable from the inlets to the outlet and the inlets and the outlet are respectively configured to halt fluid flow in a closed state and allow fluid flow in an open state;
a detector for detecting one or more of said sample particles;
a channel for delivery of said fluid to the detector, said channel in fluid communication with said outlet and said detector; and
a carrier reservoir in fluid communication with the inlet of the sample container, wherein the carrier reservoir contains a liquid carrier solution for moving a plurality of sample particles in liquid flow and the carrier solution is made to flow from the carrier reservoir to the sample container when the second inlet is in the open state,
wherein the fluid including a plurality of sample particles is introduced via the first inlet into the sample container; the sample container containing said fluid is moved about an axis in relation to the flow of carrier solution through the sample container, said movement dispersing a plurality of said sample particles in said fluid and carrier solution; said fluid and carrier solution exits the sample container via the outlet when open; and sample particles in said fluid and carrier solution flow through the channel to the detector for detection of one or more sample particles.

Some embodiments comprise a method for dispersing particles in a fluid stream for analytical purposes, comprising:
providing a sample dispersion system comprising a movable sample container configured to completely enclose a fluid including a plurality of sample particles, the sample container having a housing with two or more closable orifices to control the introduction of said fluid and/or the passage of carrier solution into the sample container and/or the passage of said fluid and carrier solution from the sample container, wherein said fluid and carrier solution is flowable from an inlet orifice to an outlet orifice and the orifices are configured to halt fluid flow in a closed state and allow fluid flow in an open state;
providing a device for analyzing one or more of said sample particles;
providing a channel for delivery of said fluid and carrier solution to the device, said channel in fluid communication with an outlet orifice in the sample container and said device;
introducing said fluid via an orifice in the sample container;
providing a carrier reservoir in fluid communication with an inlet orifice of the sample container, wherein the carrier reservoir contains a liquid carrier solution for moving a plurality of sample particles in liquid flow and the carrier solution is made to flow from the carrier reservoir to the sample container when said inlet orifice is in the open state;
causing the sample container containing said fluid to move about an axis in relation to the flow of carrier solution through the sample container, said movement dispersing a plurality of said sample particles in said fluid and carrier solution;
causing said fluid and carrier solution to exit the sample container via the outlet orifice when open; and
causing sample particles in said fluid and carrier solution to flow through the channel to the device for analysis of one or more sample particles.

Some embodiments comprise a sample introduction system, comprising:
a sample container configured to receive and completely enclose a liquid sample that is comprised of a plurality of at least one type of sample particle for analysis that is within a liquid sample fluid, wherein the sample container is configured to rotate about an axis that is substantially perpendicular to a direction of gravity;
a carrier reservoir in fluid communication with the sample container, wherein the carrier reservoir contains a liquid carrier fluid for moving a plurality of sample particles in liquid flow and the carrier fluid can be made to flow from the carrier reservoir to the sample container;
one or more actuators operably configured to rotate the sample container; and
a controller configured to control one or more actuators and cause rotation of the sample container about the axis and/or cause the liquid sample to flow at a respective rotational rate or flow rate that is dependent on a buoyancy of the at least one type of particle within the liquid carrier fluid.

Some embodiments comprise a sample dispersion system including a sample container having a housing with an orifice to allow for introduction of a fluid containing a plurality of sample particles, the same or a second orifice to allow for the introduction of a carrier fluid, and the same or a different orifice to allow for passage of both fluids from the sample container. The sample container may be configured to rotate about an axis substantially parallel to the flow through the sample container. The sample container may alternate from a first position to a second position at controllable rate, frequency, and/or direction.

Some embodiments comprise a sample introduction system including a sample container in fluid communication with a first tube and a second tube. The system may include a carrier reservoir in fluid communication with the first tube. The carrier reservoir may contain a carrier solution for moving a plurality of sample particles in a flow out of the sample container through the second tube. The sample introduction system may include a fluidics device in communication with the second tubing for introduction of the sample particles. The sample container may be configured to rotate about an axis substantially parallel to the flow through the sample container alternating between a first position and a second position at controllable rate, frequency, and/or direction.

Some embodiments comprise a method for dispersing particles comprising: providing a sample container including a volume of fluid infused with a sample; rotating the sample container around an axis substantially parallel to the flow through the sample container in a first direction from a first position to a second position at a defined rate; changing the rotational direction around the axis substantially parallel to the flow through the sample container to a second direction opposing the first direction wherein the sample container rotates from the second position to the first position at the defined rate; and pausing rotation of the sample container at the first position and the second position for a defined interval, wherein the sample container alternates rotating between the first and second position after the pause.

Some embodiments comprise a method for dispersing particles comprising: providing a sample container including a volume of fluid infused with a sample; rotating the sample container around an axis substantially perpendicular to the flow of the sample through the sample container from a first position to a second position at controllable rate, frequency, and/or direction; changing the rotational direction around the axis to a second direction opposing the first direction wherein the sample container rotates from the second position to the first position at the defined rate; and pausing rotation of the sample container at the first position and the second position for a defined interval, wherein the sample container alternates rotating between the first and second position after the pause.

In some embodiments, without limitation, the carrier reservoir is refillable and can be replenished with carrier solution by halting flow through the sample container by closing the inlet to the sample container, followed by adding additional carrier solution to the carrier reservoir. Refilling the carrier reservoir can be achieved manually or could be controlled in automated fashion with a controllable inlet to the carrier reservoir. In some embodiments, the carrier reservoir may be modular, as a nonlimiting example, as an exchangeable and/or reusable cartridge, permitting addition of carrier solution to the apparatus or system.

Without limitation, some embodiments comprise the introduction of appropriately suspended and dispersed, delicate and non-isobuoyant samples into a fluid stream in an automated and reproducible fashion. A non-isobuoyant sample may be a sample of particles in solution wherein a plurality of particles will either sink to the bottom or float to the top of the sample fluid within a time period that is less than what is needed to run the entire sample through the microfluidic device. This is achieved in at least two novel ways. First some embodiments use a gentle, flow-through method of dispersing a sample of particles to a microfluidic device instead of the techniques of aspirating or pushing the sample from a sample container. This flow-through technique preserves the integrity of complex and fragile samples because this technique imparts lower shear forces on sample particles than typical aspirating techniques. Second, the gentle dispersion of the sample particles into the fluid stream is achieved by making use of the particles' own buoyancy properties. Little or no mechanical mixing of the sample is employed and the sample container is only very gently rotated or positioned, not with the goal of agitating the sample, but with the goal of positioning the particles within the sample so that they will either float or sink and so be introduced into a flowing fluid stream of sample fluid and carrier solution by their own buoyancy properties.

The flow-through technique of some embodiments uses a liquid carrier solution that continuously dilutes the sample solution as it flows from an inlet orifice to an outlet orifice of the sample container in a laminar fashion. A gentle flow velocity gradient is established within the sample container such that the greatest flow velocity is through the center of the sample container where the carrier solution is flowing laminarly and the flow velocity decreases and becomes turbulent as the flow is measured closer to the walls of the sample container. This flow velocity gradient is established throughout the entire length of the sample container. As a result, sample particles that traverse the sample container by floating or sinking from a location near the edges of the sample container to the center of the sample container gradually get accelerated as they enter the flow gradient. This gradual acceleration of the particles imparts much lower shear forces on the particles than traditional sample dispersing techniques. The traditional methods of dispersing from a sample container generate very high shear forces on sample particles because sample particles are quickly accelerated when they slowly approach but quickly exit the sample container either at an orifice associated with the end of a tube used for aspirating the sample or an exit orifice of a sample container that is pressurized and pushes the sample through this exit orifice.

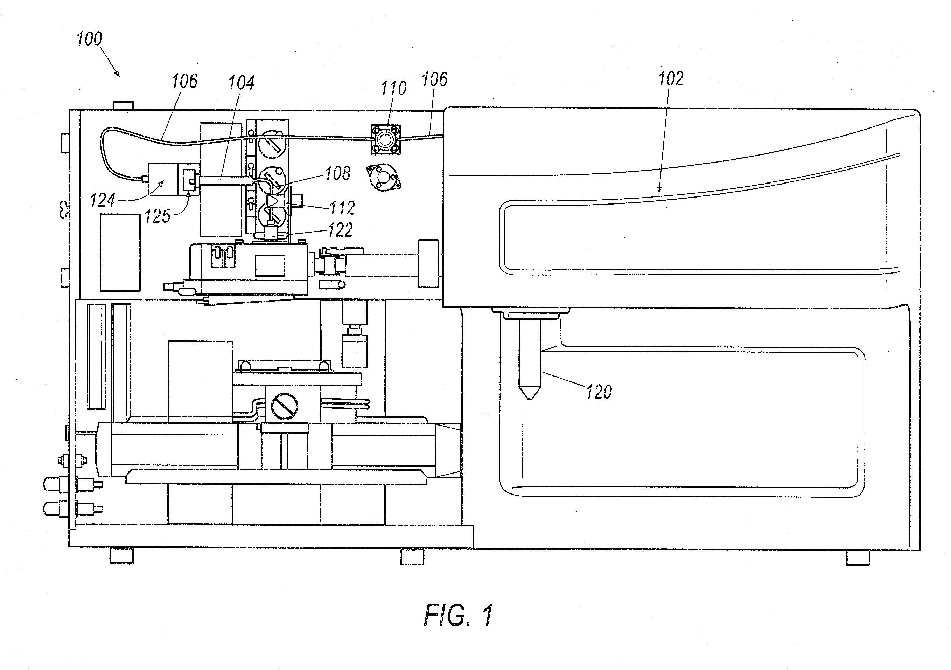

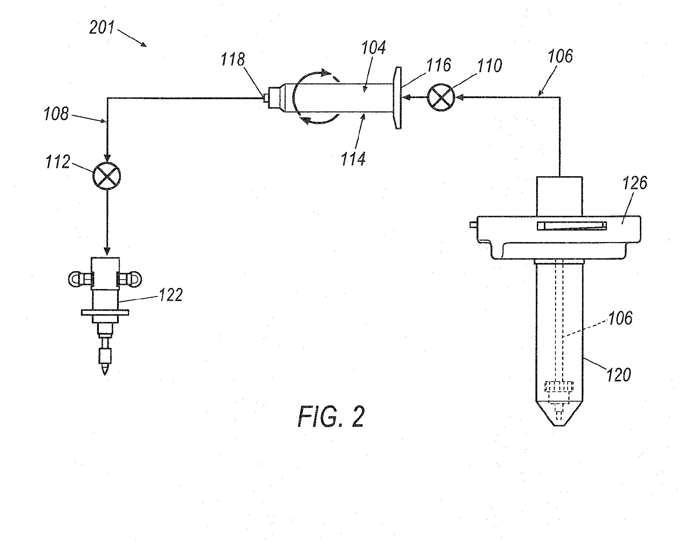

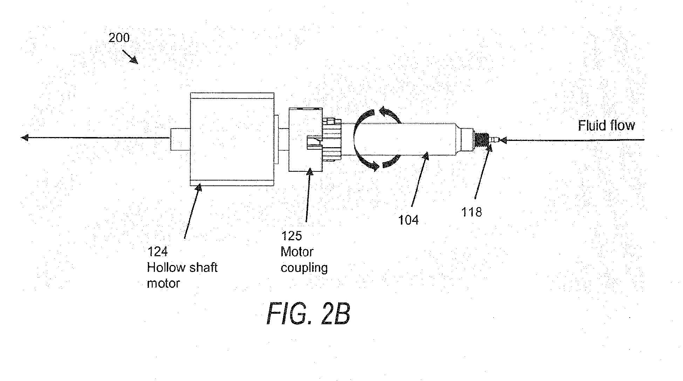

Referring to Figs. 1 and 2, in some embodiments, without limitation, the sample introduction system 201 may be mounted to an exemplary fluidics-based instrument 100 and/or automated device 102. The fluidics-based instrument 100 may be configured to control the sample introduction system 201 such that the introduction of sample particles into a fluidics-based instrument 100 for analysis and/or physical sorting of the particles is achieved. In some embodiments, without limitation, analysis may include analysis of at least one characteristic of a sample particle, as nonlimiting examples, characteristics such as biological and/or chemical and/or physical information concerning the sample particle. The sample introduction system 201 may be controlled by the system 100 or the automated device 102 in an automated fashion, as shown, or manually by hand. The system 100 may control, or be controlled by, an automated device 102 which, in turn, may be controlled by a workstation (not shown), either incorporated into or separate from these assemblies (100, 102), utilizing software with real-time data acquisition via on-board customized electronics. The workstation may be configured to control the various components and/or operating characteristics of the sample introduction system 201, such as, but not limited to, rotation speed, frequency and time, tilting angle, tilting frequency and time, fluid flow such as halting fluid flow, and fluid flow rate, etc. Further, the workstation may be configured to store operating parameters within a memory or database in order to reproduce the parameters as a repeatable procedure. In some embodiments, rotation or tilting of the sample container may be set at a rate where solid body rotation or movement of the sample particles in the sample fluid occurs during the rotation or tilting of the sample container.

Sample introduction system 201 may include a sample container 104, a first tube 106, a second tube 108, and respective first and second valves 110, 112. The sample introduction system 201 may be modular in design so that the sample container 104 and tubing 106, 108, for example, may be easily detached for introducing a fluid containing sample particles into the sample container, or to allow for cleaning or replacement of the components.

The sample introduction system 201 may be configured to disperse a wide range of sample particles by gently rotating the sample container 104 and/or by rocking the sample container 104. The sizes of the sample particles may range from about 1 micron across to about 1500 microns across, with particle size limited only by the detection capabilities of the device 100 analyzing the sample particles (as nonlimiting examples, a flow cytometer; mass spectrometer; microscope; capillary, microfluidic, or imaging device; and the like), rather than the sample introduction system 201. Often, flow cytometers analyze particles of interest that are clustered over a narrower size range. For example, zebrafish eggs and embryos may range around 1200 microns across while zebrafish larvae may be around 600-900 microns across. The eggs and larvae may make up a single sample of particles for analysis and sorting. Likewise, particles in a sample comprised of biological particles such as vesicles, cells, bacteria, fungi, algae, plant pollen, and/or protozoa may range from about 2 microns across to 40 microns across and comprise another sample of particles for detection, analysis, and sorting. The sample introduction system 201 may be particularly useful in dispersing delicate and non-isobuoyant sample particles that are difficult to disperse in solution without damaging the particles. The mixtures in the sample container 104 may be different cell types or different cell sizes and may in either case be introduced from the sample container 104 into a fluid stream for analysis and/or sorting on a fluidics-based instrument.

The sample container 104 may be configured to hold a volume of fluid containing sample particles and disperse the sample particles by rotation. The sample container 104 may include a housing 114 having an inlet 116 and an outlet 118. The housing 114 is comprised of walls to contain fluid volumes which become deposited within the housing. The inner shape of the housing 114 may be generally cylindrical or tubular. The housing 114 may have a larger inner diameter than the inlet 116 and outlet 118. For example, the outlet 118 may include a tip having an inner diameter smaller than the inner diameter of housing 114. Additionally or alternatively, the inlet 116 may have an inner diameter equal to or greater than the housing 114. For example, inlet 116 may include a housing base having a diameter greater than the diameter of the housing 114. The sample container 104 may be aligned horizontally along a longitudinal axis to maximize the dimensions for the distribution of sample particles in fluid. Additionally, the sample container 104 may be oriented vertically for the purpose of filling the sample container 104 with new or additional sample particles. Additionally or alternatively, the sample container may have additional inlets, outlets or orifices (not shown) in the housing 114 for the purpose of filling, cleaning, purging trapped air, heating, cooling or otherwise manipulating the sample container or the fluid contained therein.

The housing 114 may be formed as a unitary body configured in a cylindrical or rectangular shape, or generally tubular in shape to provide for a dimension to accommodate the dispersion of sample particles. As one nonlimiting example, the sample container 104 may have a half inch (1/2") inner diameter and be five inches (5") long. The larger the inner diameter and/or the length of the sample container 104, the greater the amount of sample that can be held. The housing 114 may be constructed of any suitable material for mixing particles in a solution, for example, polypropylene, polyethylene terephthalate (PET), polycarbonate, polymethyl methacrylate (PMMA), or like materials. It may be desired that the material chosen be clear so that the sample can be monitored by sight during agitation. Additionally, the inner surface of the housing 114 may be smooth or textured. In some embodiments, the housing's inner surface may include fins or ribs to help effectively disperse the sample particles in solution. Additionally or alternatively, the outer surface of the housing 114 may be ribbed to provide an ergonomic grasping surface to effect rotation of the sample container 104.

The sample container 104 may be in fluid communication with a first tube 106 and a second tube 108 (otherwise referred to as tubing) to act as a passage for the movement of fluid through the introduction system 201. First and second tubes 106, 108 may have an internal diameter that efficaciously transports the sample particles through the introduction system 201. For example, a one-sixteenth inch (1/16") inner diameter tubing may allow the fluid flowing through the tubing 106, 108 to be fast enough to keep the sample particles from settling within the tube 106, 108. Additionally, the inner diameter of the tubing 106, 108 may be less than the inner diameter of the sample container 104 to establish a gradient between the relatively sedentary (e.g., non-flowing) fluid near the sides of the sample container 104 as compared to the fluid flow running through the center of the sample container 104. Various types of sample particles may require different ratios of the inner diameter of the sample container 104 and tubing 106, 108.

The tubing 106, 108 may be made of flexible material so as not to impair rotation of the sample container 104, such as silicon, Tygon® tubing, fluorinated ethylene propylene (FEP), polyurethane, or combinations thereof. For example, silicon tubing may be used in areas where the tubing goes through a pinch valve for flexibility, whereas FEP or polyurethane tubing may be used in other areas to lower stickiness. Additionally or alternatively, polytetrafluoroethylene (*e.g*., Teflon®) tubing may be used. As such, one skilled in the art may understand that material science is not static but ever-changing and other materials will not change the characteristics of the disclosure. The length of tubes 106, 108 may be reduced or minimized to help prevent the sample from settling in the tube, yet sufficiently long to allow the sample container 104 to be oriented vertically providing opportunity for lateral tilting or sample particle addition.

The tubing 106, 108 may be connected to inlet 116 and outlet 118 of the sample container 104 via connectors (otherwise referred to as fittings or connector fittings). The first tube 106 may be removably fixed to the inlet 116 via a wide mouth adaptor connector fitting. For example, the adaptor connector may be a flat bottom tube fitting which may minimize the damage caused by the sample particles bumping against edges of the connection site. In an embodiment, the outlet 118 of the sample container 104 may have a male Luer taper (*e.g*., Luer-Lock or Luer-Slip) connection fitting that mates with a female Luer taper fitting of the second tube 108. Additionally or alternatively, both the inlet 116 and outlet 118 may have Luer taper connection fittings or an adaptor connector fitting. The connector fittings may screw on, snap into place, or may be pressed together and held by friction. The connector fittings may be configured to be easily removable to allow for changing and cleaning of the components of the sample introduction system 201 to maintain sterile or aseptic conditions (*e.g*., changing sample container 104, tubing 106, 108, etc.). The connector fittings may be fixed to the sample container 104 so they rotate as the sample container 104 rotates. Thus, as the sample container 104 rotates, the tubing 106, 108 correspondingly rotates or twists. Additionally or alternatively, the connector fittings may be spinning couplings that connect the tubing 106, 108 to the sample container 104, allowing sample container 104 to rotate while tubing 106, 108 are stationary.

The first tube 106 may serve as a passageway for carrier solution to travel from the carrier reservoir 120 to the sample container 104. The carrier reservoir 120 may be any type of container that can store and be used to transport carrier solution (*e.g*., Hank's balanced salt solution (HBSS) with 1% bovine serum albumin (BSA)) and can be refilled as needed, or, as a nonlimiting alternative, replaced with a carrier reservoir module containing additional carrier solution. For example, a 50 milliliter conical container may be used which may have a cylindrical or frustro-conical bottom surface. The carrier reservoir 120 may be pressurized by a pressure chamber 126 or pump driven. The carrier reservoir 120 may include a tube (either separate or the same as first tube 106) that starts at the bottom of the reservoir to receive carrier solution. In an embodiment, air pressure may be used to pressurize the carrier reservoir 120, via a pressure chamber 126, forcing carrier solution out of the reservoir through the tube 106 to the sample container 104. That is, the pressure in the carrier reservoir 120 may serve to provide the push needed to establish a stable and continuous flow rate for the carrier solution and sample particles to move through the sample introduction system 201. Additionally or alternatively, the carrier solution may be aspirated from the carrier reservoir 120 via an aspiration probe, pumped out using syringe, peristaltic, diaphragm or other type of fluid pump, or the carrier reservoir may be positioned so that the carrier solution will flow because of the force of gravity alone.

The second tube 108 may serve as a passageway for the movement of carrier solution and sample particles from the sample container 104 to the fluidics device 122 for analysis and/or sorting. The fluidics device 122 may be any microfluidics-based analyzer, as one nonlimiting example, a flow cytometer. The fluidics device may have a flow cell or fluid stream which carries the sample particles through a laser or light beam for detection. The flow cell of fluidics devices 122, such as flow cytometers, may differ depending on the accuracy of measurement desired, or if designed for image collection, and the sample particle to be analyzed. For example, some narrow microfluidic channels may have a 250 micron wide channel, used to analyze small particles such as bacteria, protozoa, algae, or plant pollen. Additionally, the fluidics device 122 may use micro fluidics channel with a 500 micron wide channel suitable for analyzing and dispensing adipocytes, for example. Fluidics devices 122 may also employ a large micro fluidic channel (*e.g*., 1000 microns or above) used when analyzing large particles such as hepatocytes, cardiomyocytes, plant protoplasts, or cell clusters (*e.g*., pancreatic islets, embryoid bodies, neurospheres, tumorspheres, etc.)

First and second tubes 106, 108 may include first and second valves 110, 112, respectively, for halting the flow of fluid in the sample introduction system 201. The valves 110, 112 may be configured to receive an engagement signal to halt the flow of fluid in an engaged state and a release signal to allow the passage of fluid in a released state. The valves 110, 112 may be configured to activate (*e.g*., engage the tubing 106, 108) independently of one another. For example, one valve may engage the tubing 106, 108 in the engaged state while the other valve is in the released state. Additionally or alternatively, the valves 110, 112 may be configured to both be in the engaged state or both be in the released state. The valves 110, 112 may be automated to halt the flow of fluid during the filling of the sample container 104 (*e.g*., new sample particles or cleaning solution) or to exchange and replace the sample container 104, to refill the carrier reservoir and/or to exchange, replace, or service components of the system or apparatus. That is, the workstation or computer program may trigger the valves 110, 112 to engage the tubes to halt fluid flow upon a user input or after some duration of time has elapsed, for example.

In one nonlimiting embodiment, automatic pinch valves or clamp valves may be used to stop fluid flow to minimize the materials that come in contact with the fluid flow (*e.g*., the valves pinch or clamp the tubing, allowing only the tubing 106, 108 to contact the fluid). Pinch valves may also allow for a straight or uninterrupted fluid flow through the valves (*e.g*., when in the released state). Upon receiving an engagement signal, the pinch valve 110, 112 may compress a flexible area of tubing 106, 108 (*e.g*., tubing made of polyurethane or FEP) to pinch and halt the flow of fluid. Additionally or alternatively, the valves 110, 112 may be automated shutoff valves which block the passageway of the tubing 106, 108 upon an engagement signal. Further, the valves 110, 112 may be manual valves which require a user to physically engage the valve to halt the fluid flow. The valves 110, 112 may assist in the modular configuration of the sample introduction system 201 to allow for easy removal of components, as nonlimiting examples, for changing and cleaning the sample container 104 to maintain sterile or aseptic conditions, or for cleaning, refilling, or replacing the carrier reservoir. For example, both valves 110, 112 may be in the engaged state to stop the flow of fluids throughout the system 201. At such time, individual subcomponents may be removed or replaced, such as the sample container 104, connector fittings, tubing 106, 108, carrier reservoir 120, fluidics device 122, etc.

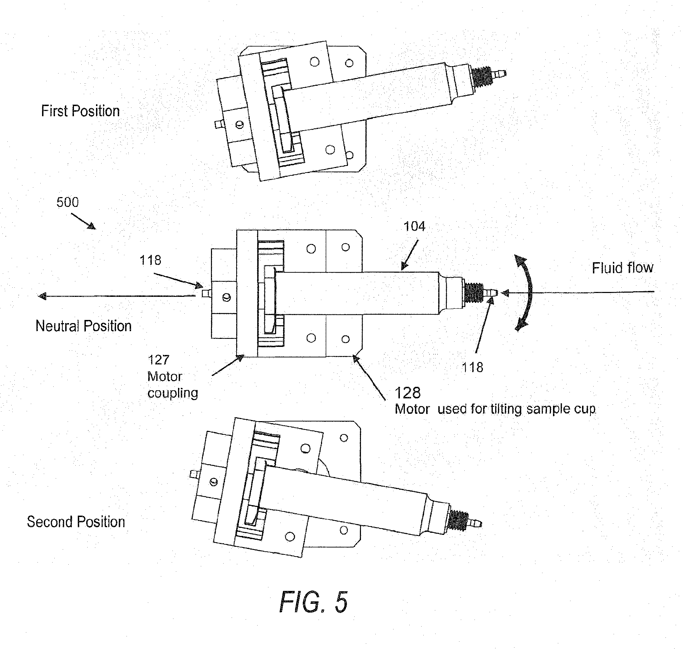

The sample introduction system 201 may be controlled manually or may include an automated actuator or motor 124 connected to the sample container by way of a coupling 125 and configured to rotate the sample container 104. Alternatively, shown in Figure 5, sample introduction system 201 may include an automated actuator or motor 128 connected to the sample container by way of a coupling 127 and configured to laterally tilt the sample container 104. Additionally, a configuration of the sample introduction system 201 that includes both the rotating motor 124 and the tilting motor 128 can be incorporated. The motor 124 may be, for example, a hollow shaft motor for rotating the sample container 104 or another rotational mechanism controlled by cams, gears, plungers, springs, air cylinders, levers or other mechanical means. Likewise, the motor 127 may be, for example, a rotational motor controlled to laterally pivot the sample container 104 or another pivoting mechanism such as cams, gears, plungers, springs, air cylinders, levers, or other mechanical means. The sample container 104 may be mounted to the motor 124 with a coupling 125 and allow the carrier solution, via the first tube 106, to pass through the center of the motor 124. However, this is merely an exemplary approach and alternative mechanisms may be employed, for example, manual rotation and lateral tilting by hand.

Fig. 2 illustrates a schematic representation of exemplary fluid flow of the sample introduction system 201. Carrier solution, such as HBSS and 1% BSA (or similar carrier media), may reside in a carrier reservoir 120. Carrier reservoir can be refilled as needed, either manually or in an automated fashion by coupling to some type of automated fluid refilling device (not shown). The carrier solution may be fed through the first tube 106 starting at the bottom of the carrier reservoir 120. Air pressure may be used to pressurize the carrier reservoir 120, via the pressure chamber 126, forcing the carrier solution out of the carrier reservoir 120, through the first tube 106 and towards the sample container 104. Alternatively, the carrier solution may be pump or gravity driven out of the carrier reservoir 120. The flow of carrier solution contained in reservoir 120 will pass through the sample container 104 which may include a sample fluid containing a plurality of particles to be dispersed. The sample fluid may be loaded directly into the sample container 104 through an orifice in the sample container 104 (*e.g*., inlet orifice 116 or outlet orifice 118 or additionally or alternatively, a sample inlet orifice not show) prior to starting the flow of fluids through the sample introduction system. Additionally or alternatively, sample fluid may be injected into the sample container 104 through an injection orifice (not shown) while fluids are flowing through the sample introduction system. The steady and continuous flow of carrier solution coming from the carrier reservoir 120 moving from the inlet 116 to the outlet 118 of the sample container 104 may disperse the particles in the sample container and carry them through the second tube 108 to the analysis device 122. Additionally, while there is a flow of fluids through the sample container 104, the sample container 104 may be gently rotated about an axis substantially parallel to the flow of fluid through the sample container dispersing non-isobuoyant sample particles into the fluid flow. Additionally or alternatively, the sample container 104 may disperse the sample particles by tilting and or rocking the sample container 104 at an incline or a decline relative to gravity causing the sample particles to be slowly and gently added to the flow of fluids exiting the sample container through the outlet 118 and flowing to the fluidics device 122 for analysis and/or sorting. For example, as the sample particles are agitated within the sample container 104, sample particles may gradually be caught and carried along in the fluid stream to be transported to the fluidics device 122. As a result of introducing the sample particles via a continuous fluid flow, the sample particles may be carried to the fluidics device 122 without the need for aggressive mixing (*e.g*., agitating, stirring, vortexing) which may damage fragile samples and/or introduce air into the fluid flow and the fluidics device (*e.g*., fluid steam is absent air bubbles), and without the sample particles being exposed to the shear forces associated with aspirating the sample from a sample container or the shear forces associated with pressurizing a sample container and forcing sample particles out through an exit orifice.

When system 100 is a flow cytometer, the pressure needed to push the carrier solution through the sample introduction system 201 must be sufficient to establish stable laminar flow within the fluidics device 122, yet low enough to keep the shear forces experienced by the particles in the sample fluid low. The force used to establish stable laminar flow may depend on a variety of factors, including, but not limited to, the microfluidic channel width within the fluidics device 122, the inner diameter and length of the first and second tube 106 and 108, and the sample particle type and size. The pressure may be calibrated based on these and/or other factors - in which the parameters may be saved on the workstation, or manually noted, to be easily reproduced later - in order to optimize fluid flow for the system 100. For example, adipocytes to be introduced into a 500 micron wide micro fluidics channel may use a pressure range between 1 and 3 pounds per square inch (psi) to drive the carrier solution through the system. However, other fluidics devices may require higher pressures and may still use the sample introduction system 201. Some flow cytometers require pressure around 100 psi. Even though this pressure is determined by optimizing the fluid flow in the system 100, the shear forces in the continuous flow sample container 104 are less than a traditional sample container because the sample particles are accelerated throughout the length of the sample container 104 instead of just at the exit orifice of the traditional sample container.

The flow rate of the carrier solution may be controlled by the amount of pressure in the pressure chamber 126. This rate may depend on the fluidic device 122 and the sample particles. For example, introducing a sample containing adipocytes to a fluidics device 122 may use a pressure of 1.5 psi to establish a flow rate of about 2 milliliters per minute to create a gentle, stable and continuous fluid flow. The steady and continuous flow rate may persist for the duration of time it takes to analyze and/or sort the sample particles, which may take upwards of 30 minutes or more. For an adipocyte sample, the sample container is filled with a sample fluid containing adipocytes and then orientated horizontally and rotated 180 degrees about the horizontal axis at a rate of 1 second per 180 degrees of rotation and at a frequency of 5 seconds between each change in position. Carrier fluid is made to flow through the sample container by opening both valves 110 and 112, and the adipocytes, being dispersed by the sample introduction system and the rotation of the sample container, will flow to the fluidics device 122 for analysis. If a component needs to be exchanged or the sample or carrier solutions need to be changed or replenished, one or both of the valves 110, 112 may engage the tubes 106, 108 to halt the flow of fluid.

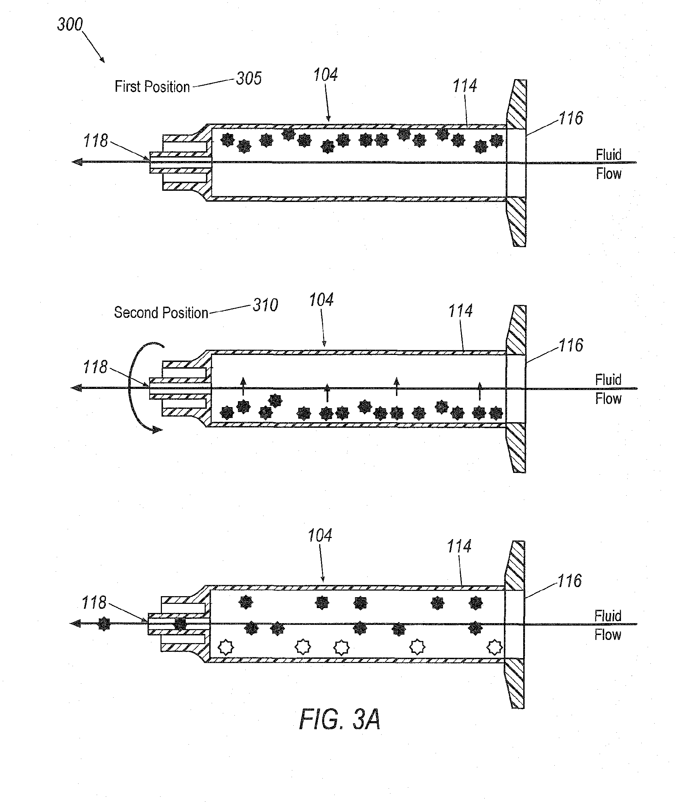

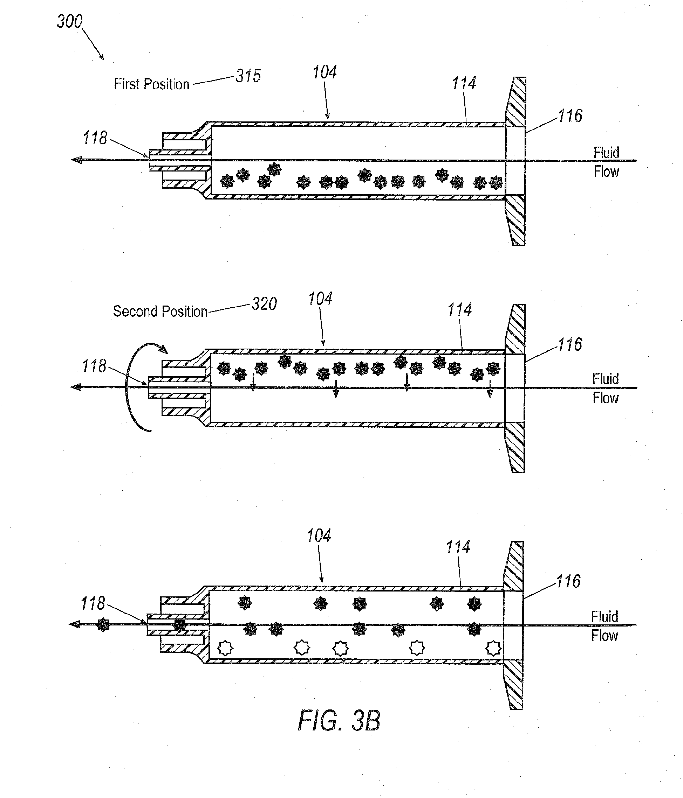

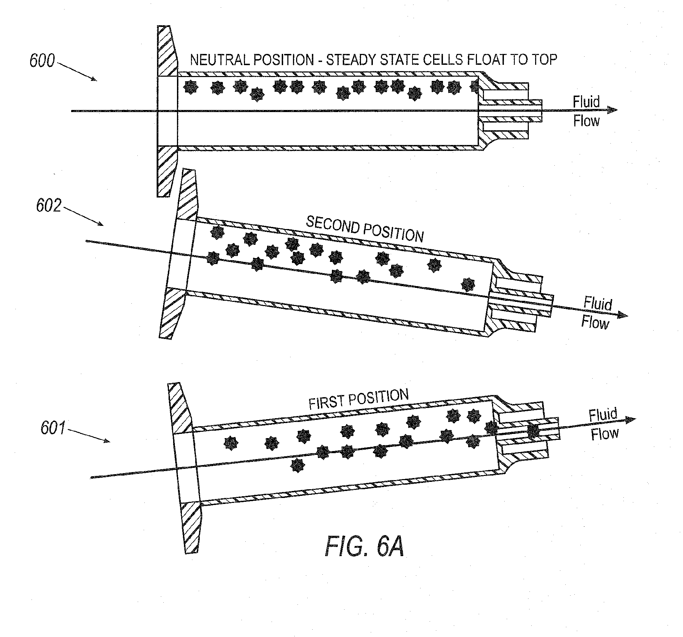

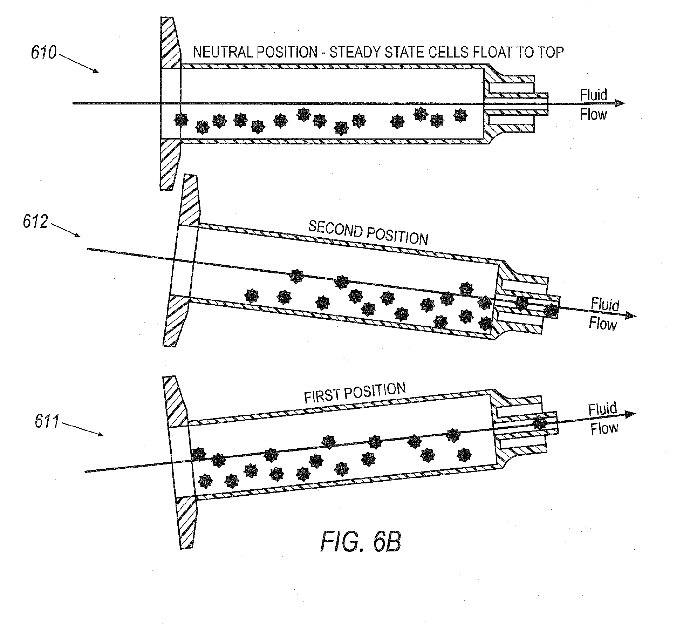

Figs. 3A and 3B are illustrative examples of the sample container 104 in the dispersion system 201 containing a sample of non-isobuoyant particles. Fig. 3A is an example of a sample particle type containing certain characteristics that make the particles float. For example, when an adipocyte is full of lipids, the cell is buoyant in aqueous solutions. Certain algal cells produce and accumulate fatty acids and oils causing them to float in aqueous solutions. Mosquito larvae will also float in aqueous solutions. At a first position 305, the buoyant sample particles are in a steady state condition at the top of the sample container 104 and out of the fluid flow (*e.g*., carrier solution). The sample container 104 may then be rotated to a second position 310, for example 180 degrees or π radians, so the sample particles are positioned on the bottom of the sample container 104. After rotation, the sample particles may traverse the sample container 104 as they float up and some sample particles are caught in the flow of carrier solution and carried out the output 118 and along to the fluidic device. Additionally or alternatively, the sample container 104 may be tilted about an axis substantially perpendicularly to the flow of the carrier solution (*e.g*., tilting the sample container 104 at an incline and decline) to further disperse the sample particles as illustrated in Fig. 5 and Fig. 6. The rate selected at which the sample container 104 rotates from the first position 305 to the second position 310, and the second position 310 to the first position 305, may depend on the sample particle, the carrier solution, and the material and shape of the sample container 104. For example, some sample particles, such as adipocytes, may move from the first position 305 to the second position 310 at a rate of one to two seconds. Likewise, the frequency at which the sample container 104 rotates may depend on the sample particle. A sample of adipocytes, for example, may be rotated every two to ten seconds to adequately disperse the particles in the carrier solution. Thus, the interval at which the sample container 104 pauses rotation at the first and second position 305, 310, and the rate at which it rotates between the first and second position 305, 310, may depend at least in part on the sample particle being mixed. For example, the frequency at which the sample container 104 rotates between the first position and the second position 305, 310 may depend on the buoyancy (or density) of the sample particle. The length of time rotating and tilting the sample container 104 may continue until the sample particles have been analyzed and/or sorted.

For purposes of this document, "substantially parallel to" or "substantially perpendicular to" an axis of fluid flow shall mean +/- 20 degrees of parallel to or perpendicular to such axis.

Fig. 3B is an illustrative example of sample particles more dense than the carrier solution, causing them to sink. Nonlimiting examples may be zebrafish eggs, *Arabidopsis* seeds, glass particles, soil particles, certain types of plastic particles, certain biological particles, or particles of similar physical characteristics. The sample particles may settle on the bottom of the sample container 104 at a first position 315. The sample container 104 may be rotated to the second position 320 to position the sample particles at the top of the sample container 104. The sample particles may gradually descend to where some may be caught in the flow of carrier solution and carried on to the fluidics device 122. The sample container 104 may alternate rotation between the first and second positions 315, 320 as more agitation is needed. That is, the sample container 104 may be rotated between the first and second positions 315, 320 at a defined intermittent interval such that there is a period of non-rotation (or pause in rotation) at the first position 315 and the second position 320. The sample particles may traverse the fluid flow throughout rotation, slowly adding sample particles to the fluid flow to be carried away to the fluidics device 122 as the sample particles ascend and descend the sample container 104. While the sample introduction system 201 is dispersing sample, the carrier solution is flowing continuously from the carrier reservoir 120 to the fluidics device 122, thus allowing sample particles to be introduced to the fluidics device without also introducing air or gases in the fluid flow.

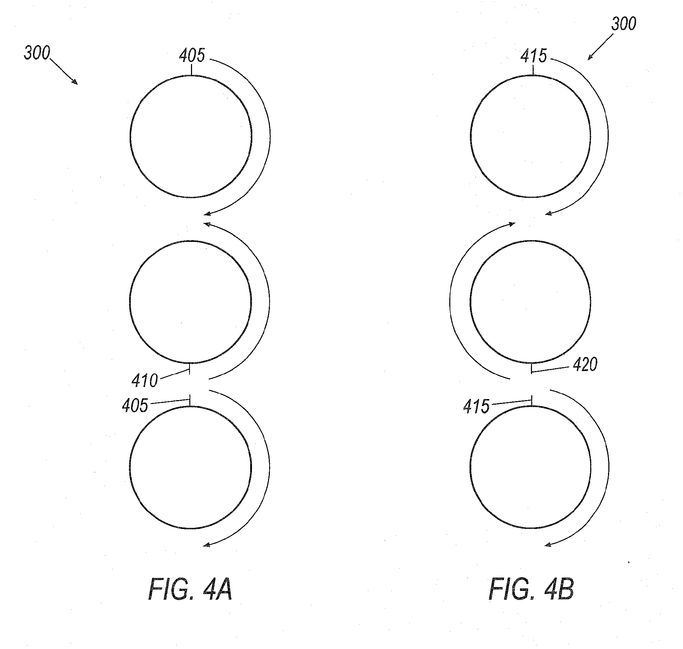

Figs. 4A and 4B illustrate a diagrammatic end view of the rotation employed by the sample dispersions system 200. Fig. 4A depicts a sample container 104 oscillating intermittently to and from a first position 405 and a second position 410. That is, once the sample container 104 rotates from the first position 405 to the second position 410 it pauses rotation for a defined interval, then reverses direction to rotate from the second position 410 to the first position 405. Thus, the sample container 104 may make a first half-revolution (*e.g*., rotates up to 180 degrees) from the first position 405 to the second position 410, and when more agitation is needed, change rotational direction to rotate back from the second position 410 to the first position 405. For example, the sample container 104 may rotate clockwise from the first position 405 to the second position 410, counterclockwise from the second position 410 to the first position 405, clockwise again from the first position 405 to the second position 410, and so on and so forth. The tubing 106, 108 may be fixed to the sample container 104 and may be flexible to twist as the sample container 104 rotates. As such, the sample container 104 and tubing 106, 108 may rotate and twist as one assembly. Because the sample container 104 reverses direction between the first and second position (*e.g*., does not make a full revolution), the amount of rotation is limited. Another example is where the sample container 104 may rotate to multiple positions in a first direction, then rotate in a direction opposite the first direction through an equal number of multiple positions, then again in the first direction, and so on and so forth. It is envisioned that this type of pausing at multiple positions may be facilitated by a sample container 104 containing one or many ribs or fins running along the length of the inside surface of the housing 114.

Fig. 4B illustrates a sample container 104 dispersing sample particles according to another embodiment. The sample container 104 may rotate from the first position 415 to the second position 420, and when more agitation is needed, continue along the same path of rotation from the second position 420 to the first position 415 without changing the rotational direction. For example, the sample container 104 may rotate clockwise from the first position 415, pause, rotate in the same direction to the second position 420, pause, then when more agitation is needed continue in the clockwise direction from the second position 420 to the first position 415 and pause, continuing the process for as long as the sample particles are being analyzed and sorted. The tubing 106, 108 may be fixed to the sample container 104 via rotating couplings to allow the sample container 104 to rotate independently from the tubing 106, 108, thus facilitating continuous rotation of the sample container 104. As such, the tubing 106, 108 may be flexible (*e.g*., polyurethane or FEP) or rigid, such as Teflon®. Another example of this operation is where the sample container 104 may rotate to multiple positions, pausing and then continuing in the same direction at each position. It is envisioned that this type of pausing at multiple positions may be facilitated by a sample container 104 containing one or many ribs or fins running along the length of the inside surface of the housing 114. Fig. 5 illustrates dispersion system 500, an embodiment of the sample introduction system 201 where laterally tilting of the sample container 104 is used to mix the sample particles. The sample container 104 may be connected to a motor coupling 127 and a rotational motor 128 so that the sample container can pendulate about an axis oblique or orthogonal to the fluid flow between a first position and a second position. That is, the sample container 104 may be configured to tilt upwards and downwards with respect to the fluid flow at controlled amounts (*e.g*., at a 10° angle with respect to the fluid flow). For example, the sample container 104 may originally reside in a horizontal position, the neutral position. If additional agitation is needed, the sample container 104 may tilt upwards or downwards from the original horizontal axis oscillating between the first and second positions.

Figs. 6A and 6B are illustrative examples of the sample dispersion system 500 for non-isobuoyant sample particles. Fig. 6A is an example of a sample particle containing certain characteristics that make the particles float. Fig. 6B is an example of a sample particle more dense than the sample fluid, causing them to sink. In either case, gentle tilting of the sample container 104 from a neutral position 600, (610 in Fig. 6B), to a first position 601, (611 in Fig. 6 B) and a second position 602, (612 in Fig 6 B) will cause the sample particles to move in a gentle tumbling motion within the sample container 104 causing some particles to get caught in the carrier fluid flow and carried along and delivered to the detector assembly. For example, an adipocyte is full of hydrophobic lipids that make the cell buoyant in aqueous solutions as illustrated by Fig. 6A. Certain algal cells produce fatty acids and oils causing them to float in aqueous solutions. At the neutral position 600, the buoyant sample particles are in a steady state condition at the top of the sample container 104 and out of the fluid flow (*e.g*., carrier solution). The sample container 104 may then be tilted to a first position 601, for example 10 degrees from the neutral position. The sample particles rise to the higher end and turbulence and tumbling of the sample particles will cause some particles to get caught in the flow of carrier solution and carried to the detector assembly. If necessary, after a pause at the first position, the sample container 104 may then be tilted in the opposite direction to a second position 602, for example negative 10 degrees from the neutral position. The sample particles rise to the higher end which is now the opposite end of the sample container 104. Once again, turbulence and tumbling of the sample particles will cause some particles to get caught in the flow of carrier solution and carried to the detector assembly. This process can be repeated so that the sample container appears to oscillate between the first and the second positions. Additionally or alternatively, the sample container 104 may be rotated about its horizontal axis to further mix the sample particles as illustrated in Fig. 3. Additionally, concentric ribs or fins may be added to the inside walls of the housing 114 of the sample container 104 to increase turbulence and tumbling of particles near the sample containers walls.

The rate selected at which the sample container 104 tilts from the first position 601 to the second position 602, and the second position 602 to the first position 601, may depend on the sample particle, the carrier solution, and the material and shape of the sample container 104. Likewise, the frequency at which the sample container 104 oscillates between these two positions may depend on the sample particle, the carrier solution, and the material and shape of the sample container 104. An adipocyte sample, for example, may be tilted every two to ten seconds to adequately disperse the particles in the carrier solution. Thus, the interval at which the sample container 104 pauses at the first and second position 601, 602, and the rate at which it oscillates between the first and second position 601, 602, may depend at least in part on the sample particle being mixed. For example, the oscillating frequency at which the sample container 104 rotates between the first position and the second position 601, 602 may depend on the buoyancy (or density) of the sample particle. The duration of rotating and tilting the sample container 104 may continue until the sample particles have been analyzed and sorted. While the sample introduction system 201 is dispersing sample, the carrier solution is flowing continuously from the carrier reservoir 120 to the fluidics device thus allowing sample particles to be introduced to the fluidics device 122 without also introducing air or gases.

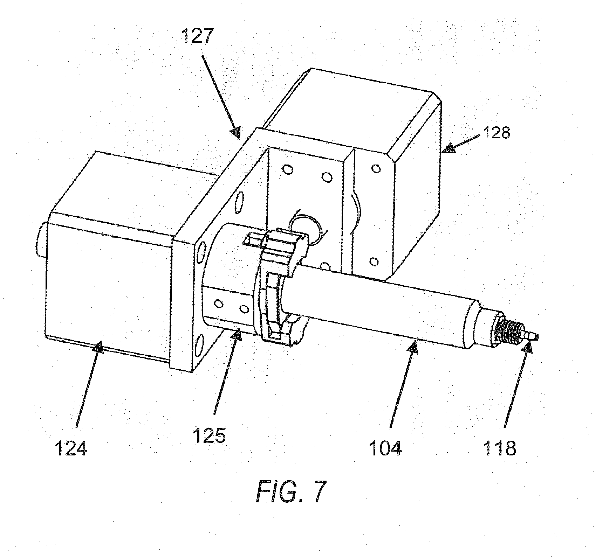

A device that enables both rotating and tilting of the sample container 104 is illustrated in Fig. 7. In this example, two motors are used to articulate these motions, a hollow shaft rotational motor 124 and coupling 125 is used for rotating the sample container 104 and a rotational motor 128 that is connected by a right angle bracket 127 so that it is able to tilt the sample container 104. These motions may be coordinated such that the rotating and tilting are done in unison, or the sample container 104 may be controlled to rotate and tilt independently. For example, the rotation of the sample container between the first position and second position may correlate with the tilting of the sample container 104 upwards or downwards. It is envisioned that in place of either or both motors, other mechanical means could be employed such as cams, springs, air cylinders, gears, levers, pistons, etc. that could produce similar rotational and tilting motions.

Rotating and tilting sample particles within the sample container 104 may gently mix the particles and disperse them within the fluid to be introduced into a fluid stream of a fluidics device 122 for analysis and sorting. Various kinds of sample particles including, but not limited to, cells and small organisms may benefit from these types of gentle agitation. For example, a sample containing zooplankton or phytoplankton, or a mixture of both, may be mixed and dispersed in the sample container 104. Likewise, a sample of nematodes, *C*. *elegans,* zebrafish larvae, and/or other small organisms, in different lifecycle stages may be dispersed within the sample container 104 and introduced into the fluid stream.

With respect to Figs. 4A, 4B, 6A and 6B, sample particles may be dispersed within a volume of fluid in a sample container 104 by rotating the sample container 104 about a longitudinal axis in a first direction from a first position to a second position at a defined rate. When more agitation is needed, the sample container 104 may change rotational direction about the axis to a second direction opposing the first direction such that the sample container 104 rotates from the second position to the first position at the defined rate along the same rotational path. Alternatively, the sample container 104 may be configured to continue rotation in the first direction from the second position to the first position. The sample container 104 may be configured to pause rotation at the first position and the second position for a defined interval at which point the sample container 104 alternates rotation between the first and second positions after the pause. Alternatively or additionally if divergent agitation is needed, the sample container 104 may tilt upwards or downwards oblique or orthogonal to the longitudinal axis.

The rate, frequency, and length of rotation and tilting (*e.g*., agitation) the sample container 104 may depend at least partially on the characteristics of the sample particles (e.g., buoyancy, density, fragility, etc.). The values for the rate, frequency, and time may initially be determined empirically to determine the optimal parameters for each. For example, it may be necessary to rotate and tilt a sample of *Arabidopsis* seeds by hand to determine the optimal rate, frequency and length of agitation. Once an optimal range of parameters is discovered, the values may be stored within the workstation or database to be easily reproduced at a later time. Accordingly, motors 124 and 127 may perform the rotating and tilting action to establish a hands-off, mechanical and reproducible approach from sample-to-sample and day-to-day operation.

The following examples of some embodiments are provided without limiting the invention to only those embodiments described herein and without disclaiming any embodiments or subject matter:

In some embodiments, without limitation, the sample dispersion system 201 is a component of a flow cytometer being used for the analysis and sorting of adipocytes. A computer and software control and/or operate the flow cytometer, and the sample dispersion system is also controlled by this software. With the flow cytometer powered up, and the control software running, the instrument is prepared for addition of adipocyte sample to the sample dispersion system. Sample carrier reservoir 120 is manually detached from pressure chamber 126 and is filled with sample carrier solution. Sample carrier reservoir is reattached. Air bubbles are purged from the tubing 106 by activating the air pressure of the pressure chamber 126 and opening valves 110 and 112, causing sample carrier solution to pass from carrier reservoir 120, through the tubing 106, through sample container 104, through tubing 108, and through microfluidic device 122, and finally out to waste or recycling. Then, valves 110 and 112 can be closed.

At this point the entire fluid path from sample carrier reservoir to beyond the analysis point of the micro fluidic device 122 is purged of air bubbles and primed for the addition of sample to the sample container 104. The sample container 104 can be oriented into a vertical position manually and the adaptor connector 116 removed from the top end of the sample container 104. Sample of particles that are to be analyzed, for example a solution of adipocytes, can be added to sample container 104 at this time. If required, sample carrier solution can first be removed manually to make room for the adipocyte sample that is to be analyzed.

Once the sample of adipocytes is added, additional sample carrier solution is also added to sample container 104 to completely fill the sample container 104 and the adapter connector 116 is reattached, taking care to exclude air from the pathway. The sample container 104 can now be oriented into the horizontal position for operation. At this time, the rotating and/or tilting motor 124 and/or 127 can be activated to gently agitate the sample container 104 (rotating with pre-determined rotation intervals and/or tilting with pre-determined intervals).

To begin the movement of adipocytes from the sample container 104 for analysis in the flow cytometer (fluidics device 122), the valves 110 and 112 are opened (controlled by the software running the instrument), resulting in fluid flow from sample carrier reservoir 120, through tubing 106, through sample container 104 picking up adipocytes in the fluid stream, carrying these particles with the stream through tubing, and continuing to fluidics device 122 for analysis. In this example, fluidics device 122 is the flow cell of a flow cytometer, specifically the BioSorter^{™} flow cytometer. This part of the flow cytometer is where analysis of the adipocytes occurs and where dispensing of adipocytes that match the optical properties (measured size, optical density, fluorescence) selected by the operator for collection. Using the features of the flow cytometer, adipocytes of specific sizes (small, medium or large) could be selected by the operator of the instrument and each could be chosen for collection, one particular size range at a time. This feature is a feature of the flow cytometer. The sample dispersion system allows adipocytes to be used as a sample in the flow cytometer by providing a method for gently introducing the adipocytes into the fluid stream to the flow cell of the flow cytometer.

In general, computing systems and/or devices such as such as the controllers, workstations, biometric devices, displays telematics functions, etc., may employ any of a number of firmware embedded controllers or computer operating systems, including, but by no means limited to, versions and/or varieties of the Microsoft Windows® operating system, the Unix operating system *(e.g.,* the Solaris® operating system distributed by Oracle Corporation of Redwood Shores, California), the AIX UNIX operating system distributed by International Business Machines of Armonk, New York, the Linux operating system, the Mac OS X and iOS operating systems distributed by Apple Inc. of Cupertino, California, the BlackBerry OS distributed by Research In Motion of Waterloo, Canada, and the Android operating system developed by the Open Handset Alliance.

Computing devices, such as the controllers, biometric devices, workstations, displays telematics functions, etc., may generally include computer-executable instructions that may be executable by one or more processors. Computer-executable instructions may be compiled or interpreted from computer programs created using a variety of programming languages and/or technologies, including, without limitation, and either alone or in combination, Java™, C, C++, Visual Basic, Java Script, Perl, etc. In general, a processor or microprocessor receives instructions, *e.g*., from a memory or a computer-readable medium, etc., and executes these instructions, thereby performing one or more processes, including one or more of the processes described herein. Such instructions and other data may be stored and transmitted using a variety of computer-readable media.

In some embodiments, without limitation, a controller may be configured to control one or more motors and cause rotation of a sample container about an axis and/or cause a liquid sample to flow at a respective rotational rate or flow rate that is dependent on a buoyancy of the at least one type of particle within a liquid carrier fluid. A controller may be operably configured to control liquid flow through a sample container, as a nonlimiting example, by controlling a closable orifice associated with the sample container. A controller may be configured to control rotation of the sample container and/or flow rate through the sample container based on user-selected or other criteria, including but not limited, buoyancy characteristics associated with a sample particle.

A computer-readable medium (also referred to as a processor-readable medium) includes any non-transitory (*e.g*., tangible) medium that participates in providing data (*e.g*., instructions) that may be read by a computer (*e.g*., by a processor of a computing device). Such a medium may take many forms, including, but not limited to, non-volatile media and volatile media. Non-volatile media may include, for example, optical or magnetic disks and other persistent memory. Volatile media may include, for example, dynamic random access memory (DRAM), which typically constitutes a main memory. Such instructions may be transmitted by one or more transmission media, including coaxial cables, copper wire and fiber optics, including the wires that comprise a system bus coupled to a processor of a computer. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, any other memory chip or cartridge, or any other medium from which a computer can read.

Databases, data repositories or other data stores described herein may include various kinds of mechanisms for storing, accessing, and retrieving various kinds of data, including a hierarchical database, a set of files in a file system, an application database in a proprietary format, a relational database management system (RDBMS), etc. Each such data store is generally included within a computing device employing a computer operating system such as one of those mentioned above, and are accessed via a network in any one or more of a variety of manners. A file system may be accessible from a computer operating system, and may include files stored in various formats. An RDBMS generally employs the Structured Query Language (SQL) in addition to a language for creating, storing, editing, and executing stored procedures, such as the PL/SQL language mentioned above.

The exemplary illustrations are not limited to the previously described examples. Rather, a plurality of variants and modifications are possible, which also make use of the ideas of the exemplary illustrations and therefore fall within the protective scope. Accordingly, it is to be understood that the above description is intended to be illustrative and not restrictive.

For the avoidance of doubt, the present invention includes the subject-matter as defined in the following numbered paragraphs.
1. A sample dispersion system for an analytical device, comprising:
   a movable sample container configured to completely enclose a fluid including a plurality of sample particles, the sample container having a housing with two or more orifices for the introduction of said fluid and/or the passage of carrier solution into the sample container and/or the passage of fluid from the sample container, wherein said fluid and carrier solution are flowable from an inlet orifice to an outlet orifice and the orifices are connected to valves or otherwise configured to halt fluid flow in a closed state and to allow fluid flow in an open state; and
   a carrier reservoir in fluid communication with the sample container, wherein the carrier reservoir contains a liquid carrier solution for moving a plurality of sample particles in liquid flow,
   wherein said fluid including a plurality of sample particles is introduced via an orifice into the sample container; liquid carrier solution is introduced via an inlet orifice into the sample container from the carrier reservoir; the sample container containing said fluid is moved about an axis in relation to the flow of carrier solution through the sample container, said movement dispersing a plurality of the sample particles in said fluid; and said fluid and carrier solution are caused to exit the sample container via an outlet orifice when open for analysis by the device.
2. The system of paragraph 1, wherein the movement of the sample container comprises rotation about an axis substantially parallel to the fluid flow through the sample container at controllable rate, frequency, and/or direction between a first position and a second position.
3. The system of paragraph 1, wherein the movement of the sample container comprises tilting about an axis substantially perpendicular to the fluid flow through the sample container at controllable rate, frequency, and/or direction between a first position and a second position.
4. The system of paragraph 1, further comprising one or more actuators operably configured to move the sample container.
5. The system of paragraph 1, wherein the plurality of sample particles comprises non-isobuoyant particles.
6. The system of paragraph 1, wherein the plurality of sample particles comprises particles with at least one characteristic to be analyzed on the device.
7. A system for detecting particles in a sample, comprising:
   a sample dispersion system comprising a movable sample container configured to completely enclose a fluid including a plurality of sample particles, the sample container having a housing with two or more orifices for the introduction of said fluid and/or the passage of carrier solution into the sample container and/or the passage of fluid from the sample container, wherein said fluid and carrier solution are flowable from an inlet orifice to an outlet orifice and the orifices are connected to valves or otherwise configured to halt fluid flow in a closed state and to allow fluid flow in an open state;
   a detector for detecting one or more of said sample particles;
   a channel for delivery of said fluid to the detector, said channel in fluid communication with an outlet orifice on the sample container and with said detector; and
   a carrier reservoir in fluid communication with the sample container, wherein the carrier reservoir contains a liquid carrier solution for moving a plurality of sample particles in liquid flow,
   wherein the fluid including a plurality of sample particles is introduced via an orifice into the sample container; liquid carrier solution is introduced via an inlet orifice into the sample container from the carrier reservoir; the sample container containing said fluid is moved about an axis in relation to the flow of carrier solution through the sample container, said movement dispersing a plurality of said sample particles in said fluid; said fluid and carrier solution are caused to exit the sample container via an outlet orifice when open; and sample particles flow through the channel to the detector for detection of one or more sample particles.
8. The system of paragraph 7, wherein the movement of the sample container comprises rotation about an axis substantially parallel to the fluid flow through the sample container at controllable rate, frequency, and/or direction between a first position and a second position.
9. The system of paragraph 7, wherein the movement of the sample container comprises tilting about an axis substantially perpendicular to the fluid flow through the sample container at controllable rate, frequency, and/or direction between a first position and a second position.
10. The system of paragraph 7, further comprising one or more actuators operably configured to move the sample container.
11. The system of paragraph 7, wherein the plurality of sample particles comprises non-isobuoyant particles.
12. The system of paragraph 7, wherein the plurality of sample particles comprises particles with at least one characteristic to be analyzed on the device.
13. A method for dispersing particles in a fluid stream for analytical purposes, comprising:
   providing a sample dispersion system comprising a movable sample container configured to completely enclose a fluid including a plurality of sample particles, the sample container having a housing with two or more orifices for the introduction of said fluid and/or the passage of carrier solution into the sample container and/or the passage of fluid from the sample container, wherein said fluid and carrier solution are flowable from an inlet orifice to an outlet orifice and the orifices are connected to valves or otherwise configured to halt fluid flow in a closed state and to allow fluid flow in an open state;
   providing a device for analyzing one or more of said sample particles;
   providing a channel for delivery of said fluid and carrier solution to the device, said channel in fluid communication with an outlet in the sample container and said device;
   introducing said fluid via an orifice into the sample container;
   providing a carrier reservoir in fluid communication with the sample container, wherein the carrier reservoir contains a liquid carrier solution for moving a plurality of sample particles in liquid flow;
   introducing liquid carrier solution via an inlet orifice into the sample container from the carrier reservoir;
   causing the sample container containing said fluid and said liquid carrier solution to move about an axis in relation to the flow of carrier solution through the sample container, said movement dispersing a plurality of said sample particles in said fluid;
   causing said fluid and carrier solution to exit the sample container via an outlet orifice when open; and
   causing sample particles to flow through the channel to the device for analysis of one or more sample particles.
14. The method of paragraph 13, wherein the movement of the sample container comprises rotation about an axis substantially parallel to the fluid flow through the sample container at controllable rate, frequency, and/or direction between a first position and a second position.
15. The method of paragraph 13, wherein the movement of the sample container comprises tilting about an axis substantially perpendicular to the fluid flow through the sample container at controllable rate, frequency, and/or direction between a first position and a second position.
16. The method of paragraph 13, further comprising providing one or more actuators configured to move the sample container.
17. The system of paragraph 13, wherein the plurality of sample particles comprises particles with that are non-isobuoyant.
18. The system of paragraph 13, wherein the plurality of sample particles comprises particles with at least one characteristic to be analyzed on the device.
19. A sample introduction system, comprising:
   a sample container configured to receive and completely enclose a liquid sample that is comprised of a plurality of at least one type of sample particle for analysis that is within a liquid carrier fluid, wherein the sample container is configured to rotate about an axis that is substantially perpendicular to a direction of gravity;
   a carrier reservoir in fluid communication with the sample container, wherein the carrier reservoir contains a liquid carrier fluid for moving a plurality of sample particles in liquid flow;
   one or more actuators operably configured to rotate the sample container;
   and
   a controller configured to control one or more actuators and cause rotation of the sample container about the axis and/or cause the liquid sample to flow at a respective rotational rate or flow rate that is dependent on a buoyancy of the at least one type of particle within the liquid carrier fluid.
20. The sample introduction system of paragraph 19, further comprising a sample container having two or more orifices for the introduction of said fluid and/or the passage of carrier solution into the sample container and/or the passage of fluid from the sample container, wherein the orifices are connected to valves or otherwise configured to halt fluid flow in a closed state and to allow fluid flow in an open state, and the controller is operably configured to control the flow by controlling the state of the orifices.
21. The sample introduction system of paragraph 19, wherein the sample container is configured to rotate, at controllable rate, frequency, and/or direction between a first position and a second position, about an axis substantially parallel with a direction of flow of the liquid sample in the sample container.
22. The sample introduction system of paragraph 19, wherein the sample container is configured to tilt, at controllable rate, frequency, and/or direction between a first position and a second position, about an axis substantially perpendicular to direction of flow of the liquid sample in the sample container.

With regard to the processes, systems, methods, heuristics, etc. described herein, it should be understood that, although the steps of such processes, etc., have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary. Additionally, use of adjectives such as first, second, third, etc. should be read to be interchangeable unless a claim recites an explicit limitation to the contrary.

## Claims

1. A sample dispersion system for an analytical device, comprising:
a movable sample container configured to completely enclose a fluid including a plurality of sample particles, the sample container having a housing with two or more orifices for the introduction of said fluid and/or the passage of carrier solution into the sample container and/or the passage of fluid from the sample container, wherein said fluid and carrier solution are flowable from an inlet orifice to an outlet orifice and the orifices are connected to valves or otherwise configured to halt fluid flow in a closed state and to allow fluid flow in an open state; and
a carrier reservoir in fluid communication with the sample container, wherein the carrier reservoir contains a liquid carrier solution for moving a plurality of sample particles in liquid flow,
wherein said fluid including a plurality of sample particles is introduced via an orifice into the sample container; liquid carrier solution is introduced via an inlet orifice into the sample container from the carrier reservoir; the sample container containing said fluid is moved about an axis in relation to the flow of carrier solution through the sample container, said movement dispersing a plurality of the sample particles in said fluid; and said fluid and carrier solution are caused to exit the sample container via an outlet orifice when open for analysis by the device.

2. The system of claim 1, wherein the movement of the sample container comprises rotation about an axis substantially parallel to the fluid flow through the sample container at controllable rate, frequency, and/or direction between a first position and a second position.

3. The system of claim 1, wherein the movement of the sample container comprises tilting about an axis substantially perpendicular to the fluid flow through the sample container at controllable rate, frequency, and/or direction between a first position and a second position.

4. The system of claim 1, 2 or 3, further comprising one or more actuators operably configured to move the sample container.

5. The system of any preceding claim, wherein the plurality of sample particles comprises non-isobuoyant particles.

6. The system of any preceding claim, wherein the plurality of sample particles comprises particles with at least one characteristic to be analyzed on the device.

7. A system for detecting particles in a sample, comprising:
a sample dispersion system as claimed in any preceding claim;
a detector for detecting one or more of said sample particles; and
a channel for delivery of fluid from the sample dispersion system to the detector, said channel in fluid communication with an outlet orifice on the sample container and with said detector, whereby in use sample particles flow through the channel to the detector for detection of one or more sample particles.

8. A method for dispersing particles in a fluid stream for analytical purposes, comprising:
providing a sample dispersion system comprising a movable sample container configured to completely enclose a fluid including a plurality of sample particles, the sample container having a housing with two or more orifices for the introduction of said fluid and/or the passage of carrier solution into the sample container and/or the passage of fluid from the sample container, wherein said fluid and carrier solution are flowable from an inlet orifice to an outlet orifice and the orifices are connected to valves or otherwise configured to halt fluid flow in a closed state and to allow fluid flow in an open state;
providing a device for analyzing one or more of said sample particles;
providing a channel for delivery of said fluid and carrier solution to the device, said channel in fluid communication with an outlet in the sample container and said device;
introducing said fluid via an orifice into the sample container;
providing a carrier reservoir in fluid communication with the sample container, wherein the carrier reservoir contains a liquid carrier solution for moving a plurality of sample particles in liquid flow;
introducing liquid carrier solution via an inlet orifice into the sample container from the carrier reservoir;
causing the sample container containing said fluid and said liquid carrier solution to move about an axis in relation to the flow of carrier solution through the sample container, said movement dispersing a plurality of said sample particles in said fluid;
causing said fluid and carrier solution to exit the sample container via an outlet orifice when open; and
causing sample particles to flow through the channel to the device for analysis of one or more sample particles.

9. The method of claim 8, wherein the movement of the sample container comprises rotation and/or tilting about an axis substantially parallel to the fluid flow through the sample container at controllable rate, frequency, and/or direction between a first position and a second position.

10. The method of claim 8 or 9, further comprising providing one or more actuators configured to move the sample container.

11. The method of claim 8, 9 or 10, wherein the plurality of sample particles comprises particles with that are non-isobuoyant.

12. The method of claim 8, 9, 10 or 11, wherein the plurality of sample particles comprises particles with at least one characteristic to be analyzed on the device.

13. A sample introduction system, comprising:
a sample container configured to receive and completely enclose a liquid sample that is comprised of a plurality of at least one type of sample particle for analysis that is within a liquid carrier fluid, wherein the sample container is configured to rotate about an axis that is substantially perpendicular to a direction of gravity;
a carrier reservoir in fluid communication with the sample container, wherein the carrier reservoir contains a liquid carrier fluid for moving a plurality of sample particles in liquid flow;
one or more actuators operably configured to rotate the sample container;
and
a controller configured to control one or more actuators and cause rotation of the sample container about the axis and/or cause the liquid sample to flow at a respective rotational rate or flow rate that is dependent on a buoyancy of the at least one type of particle within the liquid carrier fluid.

14. The sample introduction system of claim 13, further comprising a sample container having two or more orifices for the introduction of said fluid and/or the passage of carrier solution into the sample container and/or the passage of fluid from the sample container, wherein the orifices are connected to valves or otherwise configured to halt fluid flow in a closed state and to allow fluid flow in an open state, and the controller is operably configured to control the flow by controlling the state of the orifices.

15. The sample introduction system of claim 13 or 14, wherein the sample container is configured to rotate and/or tilt, at controllable rate, frequency, and/or direction between a first position and a second position, about an axis substantially parallel with a direction of flow of the liquid sample in the sample container.
